# EUROPEAN PATENT SPECIFICATION

(11) **EP 2 319 374 B1**
(45) Date of publication and mention of the grant of the patent: **19.02.2014**
(21) Application number: 08876814.8
(22) Date of filing: 01.12.2008
(51) Int. Cl.: B62B 7/08

(54) **BABY CARRIAGE**
KINDERWAGEN
LANDAU

(30) Priority: 29.08.2008 CN 200820041714 U; 29.08.2008 CN 200820041713 U; 29.08.2008 CN 200820041715 U
(43) Date of publication of application: 11.05.2011
(73) Proprietor: Goodbaby Child Products Co., Ltd., Jiangsu 215-331 (CN)
(72) Inventor: SONG, Zhenghuan, Kunshan Jiangsu 215331 (CN); HU, Jie, Kunshan Jiangsu 215331 (CN)
(74) Representative: De Vries & Metman
(86) International application number: PCT/CN2008/073272
(87) International publication number: WO 2010/022571

(56) References cited:
- EP-A2- 1 916 173
- WO-A1-2006/050644
- CN-Y- 2 133 500
- CN-Y- 2 133 501
- CN-Y- 2 389 095
- CN-Y- 2 866 283
- CN-Y- 201 077 471
- DE-A1- 3 007 888
- GB-A- 2 268 126
- US-A- 3 390 893

## Description

### Field of the Invention

The present invention relates to a baby carriage, more particularly, to a frame-foldable baby carriage.

### Description of the Related Art

The publication of patent application No. CN99239322.1 disclosed a foldable baby carriage, the carriage frame of which comprises side frames on both sides, and a supporting frame connecting the side frames. Each side frame on either side is composed of a four-bar mechanism composed of a front wheel bracket, a push rod, a seat rod and a back rod. The supporting frame comprises a bottom supporting frame disposed between the two front wheel brackets and the two back rods, and a back supporting frame disposed between the two push rods and the two back rods. It is noted that the numerous rods of the carriage frame greatly increase the production cost.

A baby carriage according to the preamble of independant claims 1 and 2 is known from US-A-3.390.893. Further DE-A-3007888 shows a baby carriage with a rotatable locking hook providing a locking mechanism for locking the carriage frame into the unfolded position.

### Summary of The Invention

The object of the present invention is to provide a baby carriage of low cost.

In order to obtain one or more of these objects, the invention provides a baby carriage, in accordance with the independant claims 1 and 2.

The baby carriage described above can be folded in light of the following process: unlocking the locking mechanism, and then pushing the two push rod forward to actuate the back supporting frame folding transversely with the upper portion leaning forward synchronizely, and the bottom supporting frame folding transversely to finish the folding.

Preferably, the locking mechanism can be disposed on the back supporting frame. Preferably, the locking mechanism is composed of a transversely foldable cross piece disposed between the lower portion of the first back rod and the lower portion of the second back rod.

Preferably, the cross piece comprises a first locking rod with the outer end rotatably connected to the lower portion of the first back rod, and a second locking rod with the outer end rotatably connected to the lower portion of the second back rod, wherein the inner end of the first locking rod is rotatably connected to the inner end of the second locking rod.

The locking mechanism can also be disposed at the rotary connection joint between the two front wheel brackets and the two push rods. Preferably, the locking mechanism comprises a first locking mechanism disposed at the rotary connection joint between the first front wheel bracket and the first push rod, and a second locking mechanism disposed at the rotary connection joint between the second front wheel bracket and the second push rod.

The first locking mechanism may comprise a first locking hook that is rotatably arranged to the lower portion of the first push rod and is capable of grappling the upper end of the first front wheel bracket, and the second locking mechanism comprises a second locking hook that is rotatably arranged to the lower portion of the second push rod and is capable of grappling the upper end of the second front wheel bracket.

Preferably, the back portion of the first seat rod, the third rotational joint and the seventh rotational joint are rotatably and coaxially connected, while the back portion of the second seat rod, the fourth rotational joint and the eighth rotational joint are rotatably and coaxially connected.

The present invention has the advantages that, no additional rods are needed for arranging the two back wheel assemblies whether the first back wheel assemblies and the second back wheel assemblies are disposed on the first seat rod and the second seat rod respectively, or on the second bottom rod and the first rod. It is noted that the fewer rods of the carriage frame significantly reduce the production cost.

### Brief Description Of The Drawings

Figure 1 is a perspective view of the baby carriage of the first preferred embodiment according to the present invention in an unfolded position.
Figure 2 is a perspective view of the baby carriage of the first preferred embodiment according to the present invention in a semi-folded position.
Figure 3 is a side view of the baby carriage of the first preferred embodiment according to the present invention in an unfolded position.
Figure 4 is a side view of the baby carriage of the first preferred embodiment according to the present invention in a semi-folded position.
Figure 5 is a side view of the baby carriage of the first preferred embodiment according to the present invention in a folded position.
Figure 6 is a perspective view of the baby carriage of the second preferred embodiment according to the present invention in an unfolded position.
Figure 7 is a perspective view of the baby carriage of the second preferred embodiment according to the present invention in a semi-folded position.
Figure 8 is a perspective view of the baby carriage of a third embodiment not belonging to the present invention in an unfolded position.
Figure 9 is a perspective view of the baby carriage of a fourth embodiment not belonging to the present invention in an unfolded position.
Figure 10 is a perspective view of the baby carriage of the fifth preferred embodiment according to the present invention in an unfolded position.

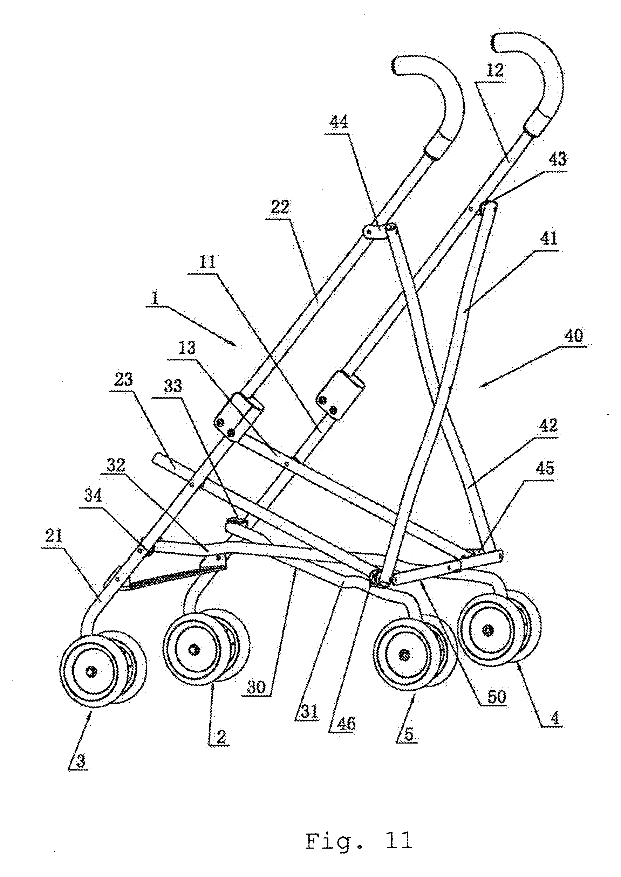

Figure 11 is a perspective view of the baby carriage of the sixth preferred embodiment according to the present invention in an unfolded position.

### Detailed Description Of The Preferred Embodiments

The detailed descriptions of the preferred embodiments according to the invention are given as below with the accompanying drawings so that the benefits and features of the present invention are understood for those skilled in the art.

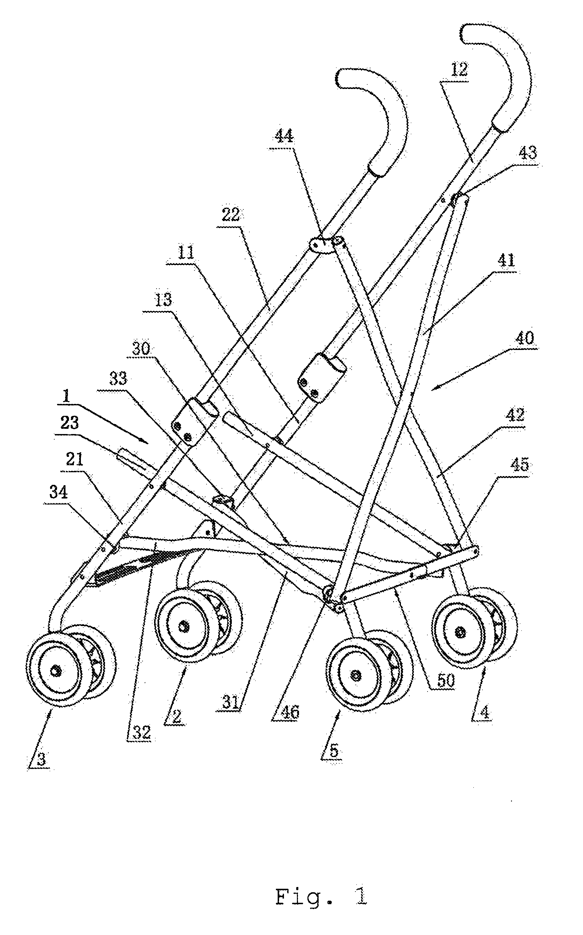

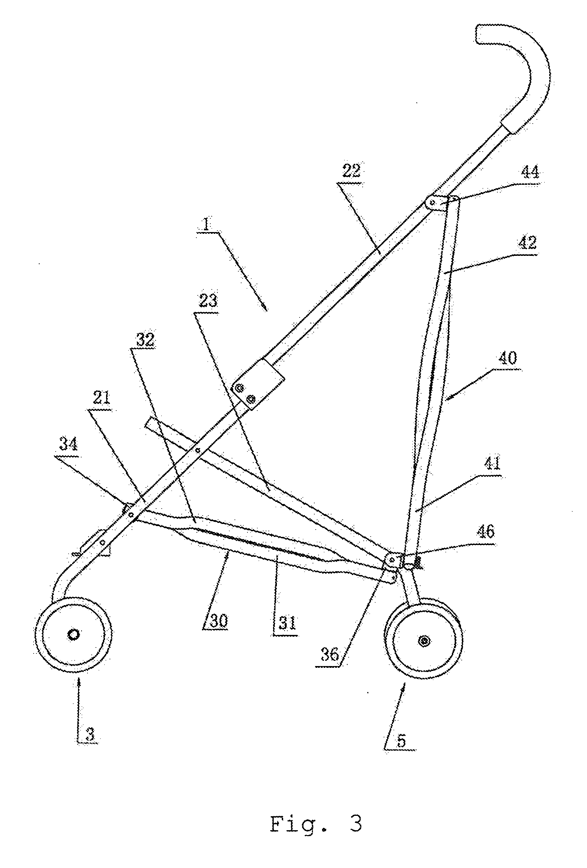

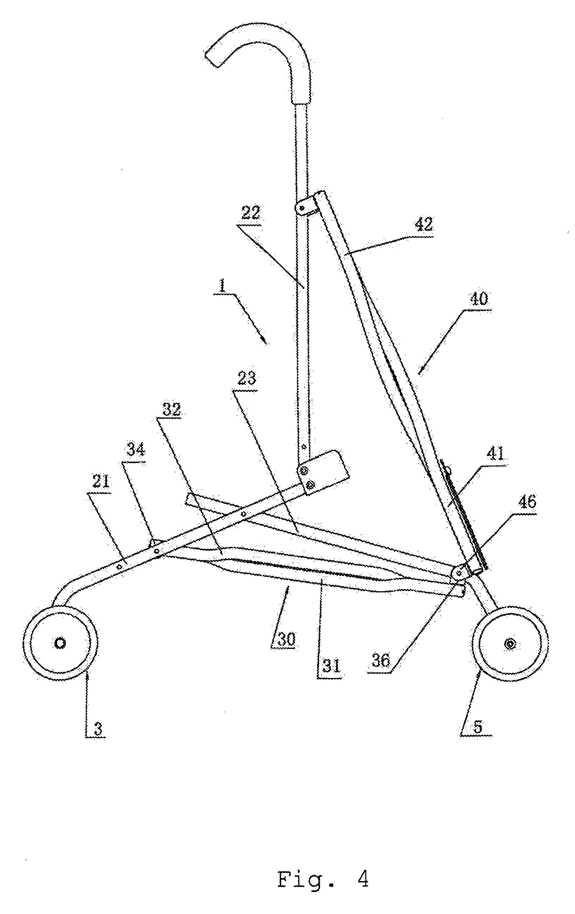

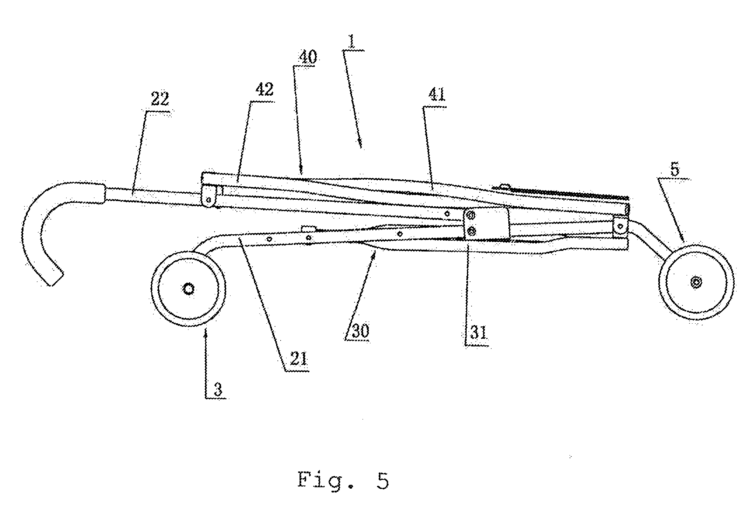

First preferred embodiment: As shown in Figs. 1 to 5, a baby carriage, comprises a carriage frame 1 provided with an unfolded position and a folded position, front wheel assemblies, back wheel assemblies, a locking mechanism disposed on the carriage frame 1 for locking the carriage frame 1 into the unfolded position, and a cloth cover (not depicted) jacketed on the carriage frame 1.

The carriage frame 1 comprises a first front wheel bracket 11, first front wheel assemblies 2 arranged under the first front wheel bracket 11, a first push rod 12 with the lower end rotatably connected to the upper portion of the first front wheel bracket 11, a first seat rod 13 with the front portion rotatably connected to the first front wheel bracket 11, a second front wheel bracket 21, second front wheel assemblies 3 arranged under the second front wheel bracket 21, a second push rod 22 with the lower end rotatably connected to the upper portion of the second front wheel bracket 21, a second seat rod 23 with the front portion rotatably connected to the second front wheel bracket 21, a transversely foldable bottom supporting frame 30, and a transversely foldable back supporting frame 40.

The bottom supporting frame 30 comprises a first bottom rod 31 and a second bottom rod 32 that intersect and rotatably connect with each other at the intersection joint. The front end of the first bottom rod 31 is rotatably arranged to the first front wheel bracket 11 through a first rotational joint 33, and the front end of the second bottom rod 32 is rotatablely arranged to the second front wheel bracket 21 through a second rotational joint 34. The back supporting frame 40 comprises a first back rod 41 and a second back rod 42 that intersect and rotatably connect with each other at the intersection joint. The upper end of the first back rod 41 is rotatably arranged to the first push rod 12 through a fifth rotational joint 43, and the upper end of the second back rod 42 is rotatably arranged to the second push rod 22 through a sixth rotational joint 44.

The back end of the first bottom rod 31 is rotatably connected to the back portion of second seat rod 23 through a fourth rotational joint; and the back end of the second bottom rod 32 is rotatably connected to the back portion of the first seat rod 13 through a third rotational joint 35.

The lower end of the first back rod 41 is rotatably connected to the back portion of second seat rod 23 through a eighth rotational joint 46; and the lower end of the second back rod 42 is rotatably connected to the back portion of first seat rod 13 through a seventh rotational joint 45. First back wheel assemblies 4 are disposed at the back portion of the first seat rod 13, and second back wheel assemblies 5 are disposed at the back portion of the second seat rod 23.

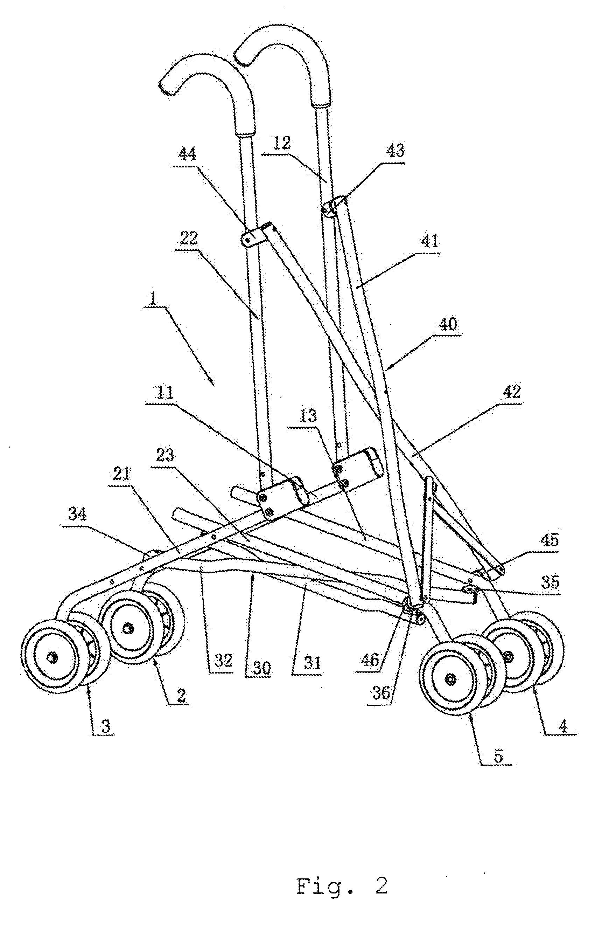

As shown in Fig. 1 and Fig.2, the locking mechanism is a transversely foldable cross piece 50 which is disposed between the lower portion of the first back rod 41 and the lower portion of the second back rod 42. The cross piece 50 comprises a first locking rod with the outer end rotatably connected to the lower portion of the first back rod 41, and a second locking rod with the outer end rotatably connected to the lower portion of the second back rod 42, wherein, the inner end of the first locking rod is rotatably connected to the inner end of the second locking rod. A locking hook is disposed on the first locking rod which grapples the second locking rod when in the locking position to keep the rods in a line that can not be folded upwards. A limitation mechanism for preventing the rods to fold downwards is disposed between the first locking rod and the second locking rod.

The first seat rod 13 extends backwards and downwards from the rotary connection joint with the third rotational joint 35 forming an extension portion of the first seat rod. The second seat rod 23 extends backwards and downwards from the rotary connection joint with the fourth rotational joint 36 forming an extension portion of the second seat rod. The first back wheel assemblies 4 are arranged at the extension portion of the first seat rod, and the second back wheel assemblies 5 are arranged at the extension portion of the second seat rod.

The back portion of the first seat rod 13, the third rotational joint 35, and the seventh rotational joint 45 are rotatably and coaxially connected. The back portion of the second seat rod 23, the fourth rotational joint 36, and the eighth rotational joint 46 are rotatably and coaxially connected.

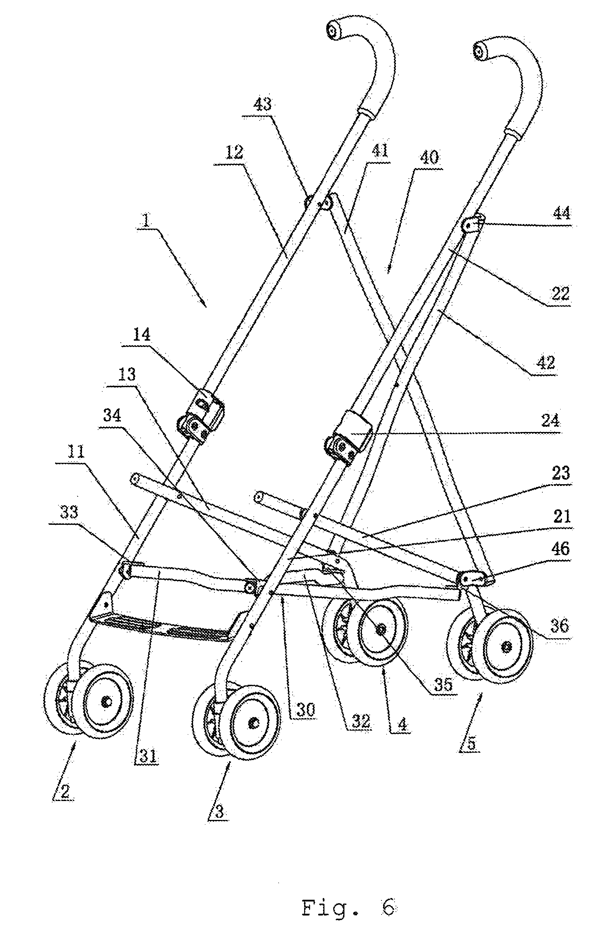

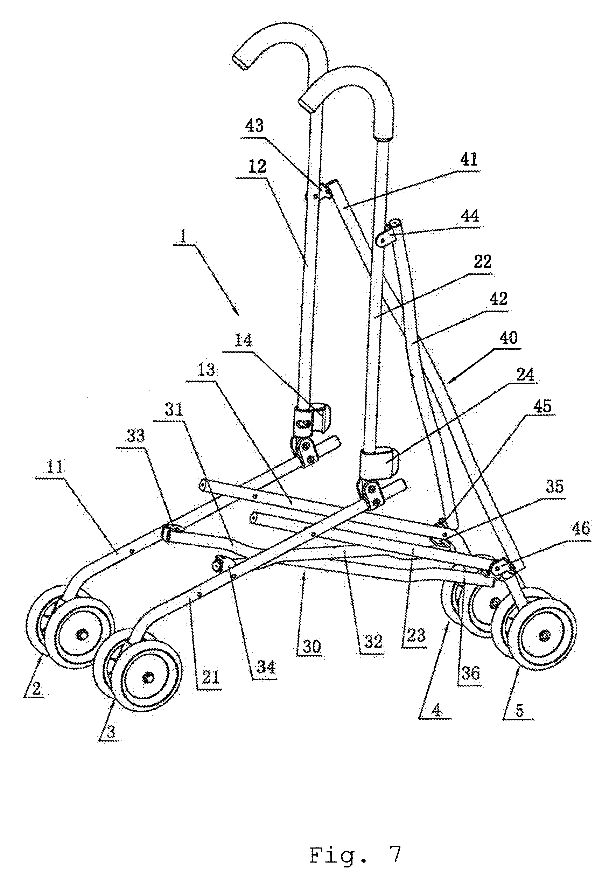

Second preferred embodiment: As shown in Fig. 6 and Fig. 7, the difference from the previous embodiment mainly lies in the locking mechanism, i.e., the locking mechanism of the current embodiment comprises a first locking mechanism disposed at the rotary connection joint between the first front wheel bracket 11 and the first push rod 12, and a second locking mechanism disposed at the rotary connection joint between the second front wheel bracket 21 and the second push rod 22. The first locking mechanism comprises a first locking hook 14 which is rotatably arranged to the lower portion of the first push rod 12 and is capable of grappling the upper end of the first front wheel bracket 11, and the second locking mechanism comprises a second locking hook 24 which is rotatably arranged to the lower portion of the second push rod 22 and which is capable of grappling the upper end of the second front wheel bracket 21, whereby, the first locking hook 14 and the second locking hook 24 depart from the first front wheel bracket 11 and the second front wheel bracket 21 respectively by overcoming the elastic resistance thereof to unlock.

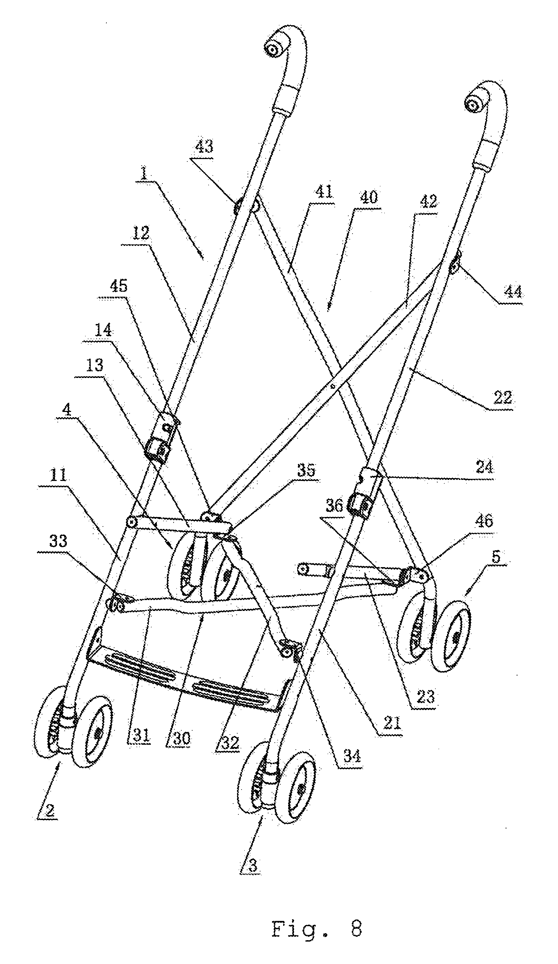

As shown in Fig. 8, the difference of the third embodiment (not belonging to the invention) from the first embodiment mainly lies in the arrangement of the first back wheel assemblies 4 and the second back wheel assemblies 5. The first back wheel assemblies 4 are disposed at the lower portion of the second back rod 42, and the second back wheel assemblies 5 are disposed at the lower portion of the first back rod 41, i.e., the second back rod 42 extends downwards from the rotary connection joint with the seventh rotational joint 45 forming an extension portion of the second back wheel, and the first back rod 41 extends downwards from the rotary connection joint with the eighth rotational joint 46 forming an extension portion of the first back wheel, wherein, the first back wheel assemblies 4 are arranged at the extension portion of the first back wheel, and the second back wheel assemblies 5 are arranged at the extension portion of first back wheel.

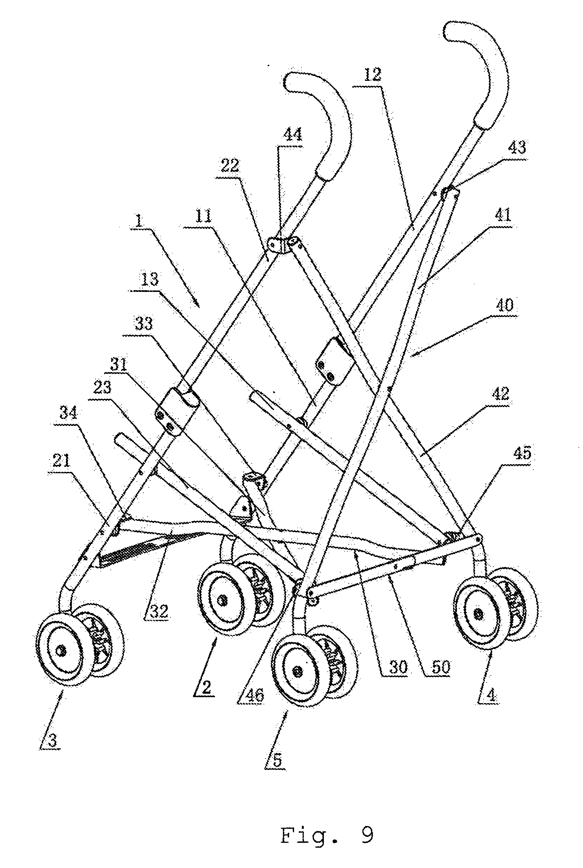

As shown in Fig. 9, the difference of the fourth embodiment (not belonging to the invention) from the previous one lies in the locking mechanism provided with the same physical construction as the one in the second embodiment, which is omitted here for abbreviation.

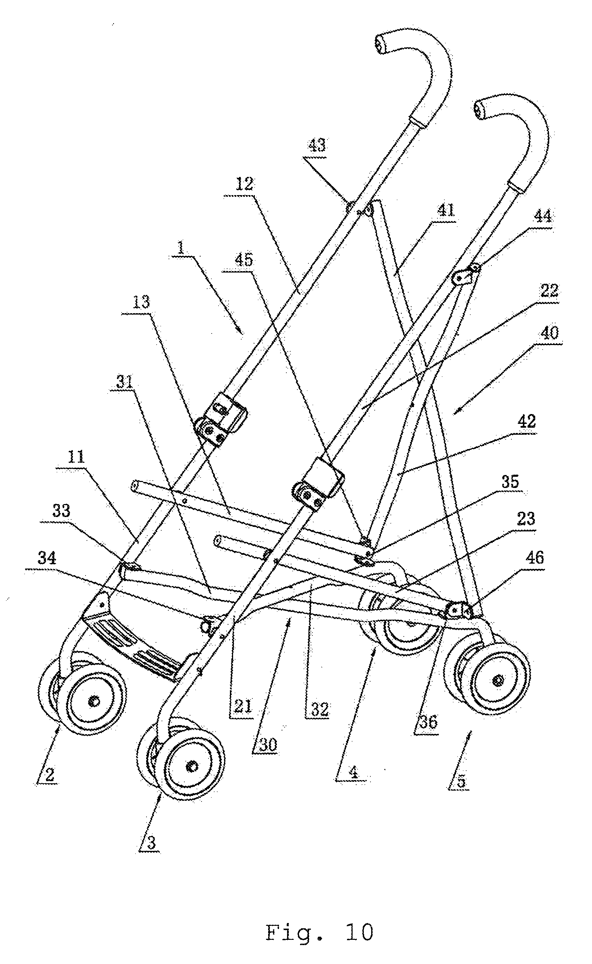

As shown in Fig. 10, the difference of the fifth embodiment from the first embodiment also lies in the arrangement of the first back wheel assemblies 4 and the second back wheel assemblies 5. The second bottom rod 32 extends backwards and downwards from the rotary connection joint with the third rotational joint 35 forming an extension portion of the second bottom rod, and the first bottom rod 31 extends backwards and downwards from the rotary connection joint with the fourth rotational joint 36 forming an extension portion of the first bottom rod, wherein, the first back wheel assemblies are arranged at the extension portion of the second bottom rod, and the second back wheel assemblies are arranged at the extension portion of the first bottom rod. As shown in Fig. 10, the difference of the current embodiment from the previous one lies in the locking mechanism provided with the same physical construction as the one in the second embodiment, which is obvious for those skilled in the art and omitted for abbreviation.

The orientations in the foregoing descriptions, for example "lower", "upper", "front", and "back", are defined according the carriage frame in the fully unfolded position, wherein, the location where the front wheel assemblies are arranged is defined as "front", while the location where the back wheel assemblies are arranged is defined as "back".

The present invention is not limited to the examples shown in the drawings and described hereinbefore, and those skilled in the art will recognize that changes may be made to the embodiments described without department from the scope of the invention disclosed as defined by the appended claims.

## Claims

1. A baby carriage, comprising a carriage frame (1) which is movable between an unfolded position and a folded position, front wheel assemblies, back wheel assemblies, and a locking mechanism disposed on the carriage frame (1) for locking the carriage frame (1) into the unfolded position;
the carriage frame (1) comprising:
a first front wheel bracket (11) with first front wheel assemblies (2) arranged under the first front wheel bracket (11);
a first push rod (12), the lower end of which is rotatably connected to the upper portion of the first front wheel bracket (11);
a first seat rod (13), the front portion of which is rotatably connected to the first front wheel bracket (11);
a second front wheel bracket (21) with second front wheel assemblies (3) arranged under the second front wheel bracket (21);
a second push rod (22), the lower end of which is rotatably connected to the upper portion of the second front wheel bracket (21);
a second seat rod (23), the front portion of which is rotatably connected to the second front wheel bracket (21);
a transversely foldable bottom supporting frame (30), comprising a first bottom rod (31) and a second bottom rod (32) that intersect and rotatably connect with each other at the intersection joint, whereby, the front end of the first bottom rod (31) is rotatably arranged to the first front wheel bracket (11) through a first rotational joint (33), and the front end of the second bottom rod (32) is rotatably arranged to the second front wheel bracket (21) through a second rotational joint (34);
a transversely foldable back supporting frame (40), comprising a first back rod (41) and a second back rod (42) that intersect and rotatably connect with each other at the intersection joint, whereby, the upper end of the first back rod (41) is rotatably arranged to the first push rod (12) through a fifth rotational joint (43), and the upper end of the second back rod (42) is rotatably arranged to the second push rod (22) through a sixth rotational joint (44);
wherein, the back end of the first bottom rod (31) is rotatably connected to the back portion of second seat rod (23) through a fourth rotational joint (36), and the back end of the second bottom rod (32) is rotatably connected to the back portion of the first seat rod (13) through a third rotational joint (35); the back portion of the first seat rod (13) is rotatably connected to the second back rod (42) through a seventh rotational joint (45), and the back portion of the second seat rod (23) is rotatably connected to the first back rod (41) through a eighth rotational joint (46);
**characterized in that** the second bottom rod (32) extends backwards and downwards from the rotary connection joint with the third rotational joint (35) forming an extension portion of the second bottom rod, and the first bottom rod (31) extends backwards and downwards from the rotary connection joint with the fourth rotational joint (36) forming an extension portion of the first bottom rod, whereby first back wheel assemblies (4) are arranged at the extension portion of the second bottom rod, and second back wheel assemblies (5) are arranged at the extension portion of the first bottom rod.

2. A baby carriage, comprising a carriage frame (1) which is movable between an unfolded position and a folded position, front wheel assemblies, back wheel assemblies, and a locking mechanism disposed on the carriage frame (1) for locking the carriage frame (1) into the unfolded position;
the carriage frame (1) comprising:
a first front wheel bracket (11) with first front wheel assemblies (2) arranged under the first front wheel bracket (11);
a first push rod (12), the lower end of which is rotatably connected to the upper portion of the first front wheel bracket (11);
a first seat rod (13), the front portion of which is rotatably connected to the first front wheel bracket (11);
a second front wheel bracket (21) with second front wheel assemblies (3) arranged under the second front wheel bracket (21);
a second push rod (22), the lower end of which is rotatably connected to the upper portion of the second front wheel bracket (21);
a second seat rod (23), the front portion of which is rotatably connected to the second front wheel bracket (21);
a transversely foldable bottom supporting frame (30), comprising a first bottom rod (31) and a second bottom rod (32) that intersect and rotatably connect with each other at the intersection joint, whereby, the front end of the first bottom rod (31) is rotatably arranged to the first front wheel bracket (11) through a first rotational joint (33), and the front end of the second bottom rod (32) is rotatably arranged to the second front wheel bracket (21) through a second rotational joint (34); a transversely foldable back supporting frame (40),
comprising a first back rod (41) and a second back rod (42) that intersect and rotatably connect with each other at the intersection joint, whereby, the upper end of the first back rod (41) is rotatably arranged to the first push rod (12) through a fifth rotational joint (43), and the upper end of the second back rod (42) is rotatably arranged to the second push rod (22) through a sixth rotational joint (44);
wherein, the back end of the first bottom rod (31) is rotatably connected to the back portion of second seat rod (23) through a fourth rotational joint (36), and the back end of the second bottom rod (32) is rotatably connected to the back portion of the first seat rod (13) through a third rotational joint (35); the back portion of the first seat rod (13) is rotatably connected to the second back rod (42) through a seventh rotational joint (45), and the back portion of the second seat rod (23) is rotatably connected to the first back rod (41) through a eighth rotational joint (46); **characterized in that** the first seat rod (13) extends backwards and downwards from the rotary connection joint with the third rotational joint (35) forming an extension portion of the first seat rod, and the second seat rod (23) extends backwards and downwards from the rotary connection joint with the fourth rotational joint (36) forming an extension portion of the second seat rod, whereby first back wheel assemblies (4) are arranged at the extension portion of the first seat rod, and second back wheel assemblies (5) are arranged at the extension portion of the second seat rod.

3. The baby carriage according to claim 1 or 2, wherein the locking mechanism comprises a first locking mechanism disposed at the rotary connection joint between the first front wheel bracket (11) and the first push rod (12), and a second locking mechanism disposed at the rotary connection joint between the second front wheel bracket (21) and the second push rod (22).

4. The baby carriage as claimed in claim 3, wherein the first locking mechanism comprises a first locking hook (14) that is rotatably arranged to the lower portion of the first push rod (12) and is capable of grappling the upper end of the first front wheel bracket (11), and the second locking mechanism comprises a second locking hook (24) that is rotatably arranged to the lower portion of the second push rod (22) and is capable of grappling the upper end of the second front wheel bracket (21).

5. The baby carriage according to claim 1 or 2, wherein the locking mechanism is a transversely foldable cross piece (50) disposed between the lower portion of the first back rod (41) and the lower portion of the second back rod (42).

6. The baby carriage as claimed in claim 5, wherein the cross piece (50) comprises a first locking rod with the outer end rotatably connected to the lower portion of the first back rod (41), and a second locking rod with the outer end rotatably connected to the lower portion of the second back rod (42), wherein the inner end of the first locking rod is rotatably connected to the inner end of the second locking rod.

7. The baby carriage as claimed in claim 1, wherein the back portion of the first seat rod (13), the third rotational joint (35) and the seventh rotational joint (45) are rotatably and coaxially connected, while the back portion of the second seat rod (23), the fourth rotational joint (36), and the eighth rotational joint (46) are rotatably and coaxially connected.

## Patentansprüche

1. Eine Kleinkindbeförderungsvorrichtung, aufweisend ein Beförderungsvorrichtungsgestell (1), welches zwischen einer entfalteten Stellung und einer gefalteten Stellung bewegbar ist, Vorderradstrukturen, Hinterradstrukturen und einen Verriegelungsmechanismus zum Verriegeln des Beförderungsvorrichtungsgestells (1) in der entfalteten Stellung, welcher am Beförderungsvorrichtungsgestell (1) angeordnet ist, das Beförderungsvorrichtungsgestell (1) aufweisend:
einen ersten Vorderradhalter (11) mit unter dem ersten Vorderradhalter (11) angeordneten ersten Vorderradstrukturen (2),
einen erste Schubstab (12), dessen unteres Ende drehbar mit dem oberen Abschnitt des ersten Vorderradhalters (11) verbunden ist,
einen ersten Sitzstab (13), dessen vorderes Ende drehbar mit dem ersten Vorderradhalter (11) verbunden ist,
einen zweiten Vorderradhalter (21) mit unter dem zweiten Vorderradhalter (21) angeordneten zweiten Vorderradstrukturen (3),
einen zweiten Schubstab (22), dessen unteres Ende drehbar mit dem oberen Abschnitt des zweiten Vorderradhalters (21) verbunden ist,
einen zweiten Sitzstab (23), dessen vorderes Ende drehbar mit dem zweiten Vorderradhalter (21) verbunden ist,
ein quer-faltbares unteres Stützgestell (30), welches einen ersten unteren Stab (31) und einen zweiten unteren Stab (32) aufweist, die sich kreuzen und drehbar miteinander am Kreuzungsgelenk verbunden sind, wobei das vordere Ende des ersten unteren Stabs (31) durch ein erstes Drehgelenk (33) drehbar am ersten Vorderradhalter (11) angeordnet ist und das vordere Ende des zweiten unteren Stabs (32) durch ein zweites Drehgelenk (34) drehbar am zweiten Vorderradhalter (21) angeordnet ist,
ein quer-faltbares hinteres Stützgestell (40), welches einen ersten hinteren Stab (41) und zweiten hinteren Stab (42) aufweist, welche sich kreuzen und drehbar miteinander am Kreuzungsgelenk verbunden sind, wobei das obere Ende des ersten hinteren Stabs (41) durch ein fünftes Drehgelenk (43) drehbar am ersten Schubstab (12) angeordnet ist und das obere Ende des zweiten hinteren Stabs (42) durch ein sechstes Drehgelenk (44) drehbar am zweiten Schubstab (22) angeordnet ist,
wobei das hintere Ende des ersten unteren Stabs (31) durch ein viertes Drehgelenk (36) drehbar mit dem hinteren Abschnitt des zweiten Sitzstabs (23) verbunden ist und das hintere Ende des zweiten unteren Stabs (32) durch ein drittes Drehgelenk (35) drehbar mit dem hinteren Abschnitt des ersten Sitzstabs (13) verbunden ist,
wobei der hintere Abschnitt des ersten Sitzstabs (13) durch ein siebtes Drehgelenk (45) drehbar mit dem zweiten hinteren Stab (42) verbunden ist und der hintere Abschnitt des zweiten Sitzstabs (23) durch ein achtes Drehgelenk (46) drehbar mit dem ersten hinteren Stab (41) verbunden ist,
**dadurch gekennzeichnet, dass** sich der zweite untere Stab (32) vom Drehverbindungsgelenk nach hinten und nach unten erstreckt, wobei das dritte Drehgelenk (35) einen Verlängerungsabschnitt des zweiten unteren Stabs formt, und sich der erste untere Stab (31) vom Drehverbindungsgelenk nach hinten und nach unten erstreckt, wobei das vierte Drehgelenk (36) einen Verlängerungsabschnitt des ersten unteren Stabs formt, wodurch erste Hinterradstrukturen (4) am Verlängerungsabschnitt des zweiten unteren Stabs angeordnet sind, und zweite Hinterradstrukturen (5) am Verlängerungsabschnitt des ersten unteren Stabs angeordnet sind.

2. Eine Kleinkindbeförderungsvorrichtung, aufweisend ein Beförderungsvorrichtungsgestell (1), welches zwischen einer entfalteten Stellung und einer gefalteten Stellung bewegbar ist, Vorderradstrukturen, Hinterradstrukturen und einen Verriegelungsmechanismus zum Verriegeln des Beförderungsvorrichtungsgestells (1) in der entfalteten Stellung, welcher am Beförderungsvorrichtungsgestell (1) angeordnet ist, das Beförderungsvorrichtungsgestell (1) aufweisend:
einen ersten Vorderradhalter (11) mit unter dem ersten Vorderradhalter (11) angeordneten ersten Vorderradstrukturen (2),
einen ersten Schubstab (12), dessen unteres Ende drehbar mit dem oberen Abschnitt des ersten Vorderradhalters (11) verbunden ist,
einen ersten Sitzstab (13), dessen vorderes Ende drehbar mit dem ersten Vorderradhalter (11) verbunden ist,
einen zweiten Vorderradhalter (21) mit unter dem zweiten Vorderradhalter (21) angeordneten zweiten Vorderradstrukturen (3),
einen zweiten Schubstab (22), dessen unteres Ende drehbar mit dem oberen Abschnitt des zweiten Vorderradhalters (21) verbunden ist,
einen zweiten Sitzstab (23), dessen vorderes Ende drehbar mit dem zweiten Vorderradhalter (21) verbunden ist,
ein quer-faltbares unteres Stützgestell (30), welches einen ersten unteren Stab (31) und einen zweiten unteren Stab (32) aufweist, die sich kreuzen und drehbar miteinander am Kreuzungsgelenk verbunden sind, wobei das vordere Ende des ersten unteren Stabs (31) durch ein erstes Drehgelenk (33) drehbar am ersten Vorderradhalter (11) angeordnet ist und das vordere Ende des zweiten unteren Stabs (32) durch ein zweites Drehgelenk (34) drehbar am zweiten Vorderradhalter (21) angeordnet ist,
ein quer-faltbares hinteres Stützgestell (40), welches einen ersten hinteren Stab (41) und zweiten hinteren Stab (42) aufweist, welche sich kreuzen und drehbar miteinander am Kreuzungsgelenk verbunden sind, wobei das obere Ende des ersten hinteren Stabs (41) durch ein fünftes Drehgelenk (43) drehbar am ersten Schubstab (12) angeordnet ist und das obere Ende des zweiten hinteren Stabs (42) durch ein sechstes Drehgelenk (44) drehbar am zweiten Schubstab (22) angeordnet ist,
wobei das hintere Ende des ersten unteren Stabs (31) durch ein viertes Drehgelenk (36) drehbar mit dem hinteren Abschnitt des zweiten Sitzstabs (23) verbunden ist und das hintere Ende des zweiten unteren Stabs (32) durch ein drittes Drehgelenk (35) drehbar mit dem hinteren Abschnitt des ersten Sitzstabs (13) verbunden ist,
wobei der hintere Abschnitt des ersten Sitzstabs (13) durch ein siebtes Drehgelenk (45) drehbar mit dem zweiten hinteren Stab (42) verbunden ist und der hintere Abschnitt des zweiten Sitzstabs (23) durch ein achtes Drehgelenk (46) drehbar mit dem ersten hinteren Stab (41) verbunden ist,
**dadurch gekennzeichnet, dass** sich der zweite Sitzstab (13) vom Drehverbindungsgelenk nach hinten und nach unten erstreckt, wobei das dritte Drehgelenk (35) einen Verlängerungsabschnitt des ersten Sitzstabs formt, und sich der zweite Sitzstab (23) vom Drehverbindungsgelenk nach hinten und nach unten erstreckt, wobei das vierte Drehgelenk (36) einen Verlängerungsabschnitt des zweiten Sitzstabs formt, wodurch erste Hinterradstrukturen (4) am Verlängerungsabschnitt des ersten Sitzstabs angeordnet sind, und zweite Hinterradstrukturen (5) am Verlängerungsabschnitt des zweiten Sitzstabs angeordnet sind.

3. Die Kleinkindbeförderungsvorrichtung gemäß Anspruch 1 oder 2, wobei der Verriegelungsmechanismus aufweist einen ersten Verriegelungsmechanismus, welcher am Drehverbindungsgelenk zwischen dem ersten Vorderradhalter (11) und dem ersten Schubstab (12) angeordnet ist, und einen zweiten Verriegelungsmechanismus, welcher am Drehverbindungsgelenk zwischen dem zweiten Vorderradhalter (21) und dem zweiten Schubstab (22) angeordnet ist.

4. Die Kleinkindbeförderungsvorrichtung wie in Anspruch 3 beansprucht, wobei der erste Verriegelungsmechanismus einen ersten Verriegelungshaken (14) aufweist, der drehbar am unteren Abschnitt des ersten Schubstabs (12) angeordnet ist und der geeignet ist, um das obere Ende des ersten Vorderradhalters (11) zu packen, und der zweite Verriegelungsmechanismus einen zweiten Verriegelungshaken (24) aufweist, der drehbar am unteren Abschnitt des zweiten Schubstabs (22) angeordnet ist und der geeignet ist, um das obere Ende des zweiten Vorderradhalters (21) zu packen.

5. Die Kleinkindbeförderungsvorrichtung gemäß Anspruch 1 oder 2, wobei der Verriegelungsmechanismus ein quer-faltbares Querstück (50) ist, welches zwischen dem unteren Abschnitt des ersten hinteren Stabs (41) und dem unteren Abschnitt des zweiten hinteren Stabs (42) angeordnet ist.

6. Die Kleinkindbeförderungsvorrichtung wie in Anspruch 5 beansprucht, wobei das Querstück (50) aufweist einen ersten Verriegelungsstab, wobei das äußere Ende drehbar mit dem unteren Abschnitt des ersten hinteren Stabs (41) verbunden ist, und einen zweiten Verriegelungsstab, wobei das äußere Ende drehbar mit dem unteren Abschnitt des zweiten hinteren Stabs (42) verbunden ist, wobei das innere Ende des ersten Verriegelungsstabs drehbar mit dem inneren Ende des zweiten Verriegelungsstabs verbunden ist.

7. Die Kleinkindbeförderungsvorrichtung wie in Anspruch 1 beansprucht, wobei der hintere Abschnitt des ersten Sitzstabs (13), das dritte Drehgelenk (35) und das siebte Drehgelenk (45) drehbar und koaxial verbunden sind, während der hintere Abschnitt des zweiten Sitzstabs (23), das vierte Drehgelenk (36) und das achte Drehgelenk (46) drehbar und koaxial verbunden sind.

## Revendications

1. Poussette, comprenant un cadre de poussette (1) qui est mobile entre une position dépliée et une position pliée, des ensembles roues avant, des ensembles roues arrière, et un mécanisme de verrouillage disposé sur le cadre de poussette (1) pour verrouiller le cadre de poussette (1) dans la position dépliée ;
le cadre de poussette (1) comprenant :
un premier support de roues avant (11) avec des premiers ensembles roues avant (2) agencés sous le premier support de roues avant (11) ;
une première tige de poussée (12), dont l'extrémité inférieure est raccordée de façon rotative à la partie supérieure du premier support de roues avant (11) ;
une première tige de siège (13), dont la partie avant est raccordée de façon rotative au premier support de roues avant (11) ;
un second support de roues avant (21) avec des seconds ensembles roues avant (3) agencés sous le second support de roues avant (21) ;
une seconde tige de poussée (22), dont l'extrémité inférieure est raccordée de façon rotative à la partie supérieure du second support de roues avant (21) ;
une seconde tige de siège (23), dont la partie avant est raccordée de façon rotative au second support de roues avant (21) ;
un cadre de support inférieur pliable transversalement (30), comprenant une première tige inférieure (31) et une seconde tige inférieur (32) qui se croisent et se raccordent de façon rotative l'une à l'autre au joint d'intersection, moyennant quoi l'extrémité avant de la première tige inférieure (31) est agencée de façon rotative sur le premier support de roues avant (11) par l'intermédiaire d'un premier joint rotatif (33), et l'extrémité avant de la seconde tige inférieure (32) est agencée de façon rotative sur le second support de roues avant (21) par l'intermédiaire d'un deuxième joint rotatif (34) ;
un cadre de support de dossier pliable transversalement (40), comprenant une première tige de dossier (41) et une seconde tige de dossier (42) qui se croisent et se raccordent de façon rotative l'une à l'autre au joint d'intersection, moyennant quoi l'extrémité supérieure de la première tige de dossier (41) est agencée de façon rotative sur la première tige de poussée (12) par l'intermédiaire d'un cinquième joint rotatif (43), et l'extrémité supérieure de la seconde tige de dossier (42) est agencée de façon rotative sur la seconde tige de poussée (22) par l'intermédiaire d'un sixième joint rotatif (44) ;
dans laquelle l'extrémité arrière de la première tige inférieure (31) est raccordée de façon rotative à la partie arrière de la seconde tige de siège (23) par l'intermédiaire d'un quatrième joint rotatif (36), et l'extrémité arrière de la seconde tige inférieure (32) est raccordée de façon rotative à la partie arrière de la première tige de siège (13) par l'intermédiaire d'un troisième joint rotatif (35) ; la partie arrière de la première tige de siège (13) est raccordée de façon rotative à la seconde tige de dossier (42) par l'intermédiaire d'un septième joint rotatif (45), et
la partie arrière de la seconde tige de siège (23) est raccordée de façon rotative à la première tige de dossier (41) par l'intermédiaire d'un huitième joint rotatif (46) ;
**caractérisée en ce que** la seconde tige inférieure (32) s'étend vers l'arrière et vers le bas à partir du joint de raccordement rotatif avec le troisième joint rotatif (35) formant une partie de prolongement de la seconde tige inférieure, et la première tige inférieure (31) s'étend vers l'arrière et vers le bas à partir du joint de raccordement rotatif avec le quatrième joint rotatif (36) formant une partie de prolongement de la première tige inférieure, moyennant quoi des premiers ensembles roues arrière (4) sont agencés sur la partie de prolongement de la seconde tige inférieure, et des seconds ensembles roues arrière (5) sont agencés sur la partie de prolongement de la première tige inférieure.

2. Poussette, comprenant un cadre de poussette (1) qui est mobile entre une position dépliée et une position pliée, des ensembles roues avant, des ensembles roues arrière, et un mécanisme de verrouillage disposé sur le cadre de poussette (1) pour verrouiller le cadre de poussette (1) dans la position dépliée ;
le cadre de poussette (1) comprenant :
un premier support de roues avant (11) avec des premiers ensembles roues avant (2) agencés sous le premier support de roues avant (11) ;
une première tige de poussée (12), dont l'extrémité inférieure est raccordée de façon rotative à la partie supérieure du premier support de roues avant (11) ;
une première tige de siège (13), dont la partie avant est raccordée de façon rotative au premier support de roues avant (11) ;
un second support de roues avant (21) avec des seconds ensembles roues avant (3) agencés sous le second support de roues avant (21) ;
une seconde tige de poussée (22), dont l'extrémité inférieure est raccordée de façon rotative à la partie supérieure du second support de roues avant (21) ;
une seconde tige de siège (23), dont la partie avant est raccordée de façon rotative au second support de roues avant (21) ;
un cadre de support inférieur pliable transversalement (30), comprenant une première tige inférieure (31) et une seconde tige inférieure (32) qui se croisent et se raccordent de façon rotative l'une à l'autre au joint d'intersection, moyennant quoi l'extrémité avant de la première tige inférieure (31) est agencée de façon rotative sur le premier support de roues avant (11) par l'intermédiaire d'un premier joint rotatif (33), et l'extrémité avant de la seconde tige inférieure (32) est agencée de façon rotative sur le second support de roues avant (21) par l'intermédiaire d'un deuxième joint rotatif (34) ;
un cadre de support de dossier pliable transversalement (40), comprenant une première tige de dossier (41) et une seconde tige de dossier (42) qui se croisent et se raccordent de façon rotative l'une à l'autre au joint d'intersection, moyennant quoi, l'extrémité supérieure de la première tige de dossier (41) est agencée de façon rotative sur la première tige de poussée (12) par l'intermédiaire d'un cinquième joint rotatif (43), et l'extrémité supérieure de la seconde tige de dossier (42) est agencée de façon rotative sur la seconde tige de poussée (22) par l'intermédiaire d'un sixième joint rotatif (44) ;
dans laquelle l'extrémité arrière de la première tige inférieure (31) est raccordée de façon rotative à la partie arrière de la seconde tige de siège (23) par l'intermédiaire d'un quatrième joint rotatif (36), et l'extrémité arrière de la seconde tige inférieure (32) est raccordée de façon rotative à la partie arrière de la première tige de siège (13) par l'intermédiaire d'un troisième joint rotatif (35) ; la partie arrière de la première tige de siège (13) est raccordée de façon rotative à la seconde tige de dossier (42) par l'intermédiaire d'un septième joint rotatif (45), et
la partie arrière de la seconde tige de siège (23) est raccordée de façon rotative à la première tige de dossier (41) par l'intermédiaire d'un huitième joint rotatif (46) ;
**caractérisée en ce que** la première tige de siège (13) s'étend vers l'arrière et vers le bas à partir du joint de raccordement rotatif avec le troisième joint rotatif (35) formant une partie de prolongement de la première tige de siège, et la seconde tige de siège (23) s'étend vers l'arrière et vers le bas à partir du joint de raccordement rotatif avec le quatrième joint rotatif (36) formant une partie de prolongement de la seconde tige de siége, moyennant quoi des premiers ensembles roues arrière (4) sont agencés sur la partie de prolongement de la première tige de siège, et des seconds ensembles roues arrière (5) sont agencés sur la partie de prolongement de la seconde tige de siège.

3. Poussette selon la revendication 1 ou 2, dans laquelle le mécanisme de verrouillage comprend un premier mécanisme de verrouillage disposé au joint de raccordement rotatif entre le premier support de roues avant (11) et la première tige de poussée (12), et un second mécanisme de verrouillage disposé au joint de raccordement rotatif entre le second support de roues avant (21) et la seconde tige de poussée (2).

4. Poussette selon la revendication 3, dans laquelle le premier mécanisme de verrouillage comprend un premier crochet de verrouillage (14) qui est agencé de façon rotative sur la partie inférieure de la première tige de poussée (12) et est capable de saisir l'extrémité supérieure du premier support de roues avant (11), et le second mécanisme de verrouillage comprend un second crochet de verrouillage (24) qui est agencé de façon rotative sur la partie inférieure de la seconde tige de poussée (22) et est capable de saisir l'extrémité supérieure du second support de roues avant (21).

5. Poussette selon la revendication 1 ou 2, dans laquelle le mécanisme de verrouillage est une pièce transversale pliable transversalement (50) disposée entre la partie inférieure de la première tige de dossier (41) et la partie inférieure de la seconde tige de dossier (42).

6. Poussette selon la revendication 5, dans laquelle la pièce transversale (50) comprend une première tige de verrouillage avec l'extrémité extérieure raccordée de façon rotative à la partie inférieure de la première tige de dossier (41), et une seconde tige de verrouillage avec l'extrémité extérieure raccordée de façon rotative à la partie inférieure de la seconde tige de dossier (42), dans laquelle l'extrémité intérieure de la première tige de verrouillage est raccordée de façon rotative à l'extrémité intérieure de la seconde tige de verrouillage.

7. Poussette selon la revendication 1, dans laquelle la partie arrière de la première tige de siège (13), le troisième joint rotatif (35) et le septième joint rotatif (45) sont raccordés de façons rotative et coaxiale, alors que la partie arrière de la seconde tige de siège (23), le quatrième joint rotatif (36), et le huitième joint rotatif (46) sont raccordés de façon rotative et coaxiale.
